# NEUE EUROPÄISCHE PATENTSCHRIFT

(11) **EP 3 861 410 B2**
(45) Veröffentlichungstag und Bekanntmachung des Hinweises auf die Entscheidung über den Einspruch: **15.07.2026**
(45) Hinweis auf die Patenterteilung: 13.09.2023
(21) Anmeldenummer: 19812698.9
(22) Anmeldetag: 13.11.2019
(51) Int. Cl.: G05B 19/4062, G05B 23/02, H02P 29/02, H02P 23/14

(54) **VERFAHREN UND SYSTEM ZUR ÜBERWACHUNG DES BETRIEBES MINDESTENS EINER ANTRIEBSKOMPONENTE**
METHOD AND SYSTEM OF MONITORING THE OPERATION OF AT LEAST ONE DRIVE COMPONENT
PROCÉDÉ ET SYSTÈME DE SURVEILLANCE DU FONCTIONNEMENT D'AU MOINS UN COMPOSANT D'ENTRAÎNEMENT

(30) Priorität: 30.11.2018 EP 18209532
(43) Veröffentlichungstag der Anmeldung: 11.08.2021
(73) Patentinhaber: Siemens Aktiengesellschaft, 80333 München (DE)
(72) Erfinder: WINTER, Jens, 37235 Hessisch Lichtenau (DE)
(74) Vertreter: Siemens Patent Attorneys
(86) Internationale Anmeldenummer: PCT/EP2019/081240
(87) Internationale Veröffentlichungsnummer: WO 2020/109005

(56) Entgegenhaltungen:
- EP-A1- 3 118 605
- US-A1- 2012 239 348
- US-A1- 2018 106 261

## Beschreibung

Die Erfindung betrifft ein Verfahren zur Überwachung des Betriebes mindestens einer Antriebskomponente.

Des Weiteren betrifft die Erfindung ein System zur Überwachung des Betriebes mindestens einer Antriebskomponente.

Darüber hinaus betrifft die Erfindung ein Computerprogramm zur Durchführung eines derartigen Verfahrens bei Ablauf in einer zentralen IT-Infrastruktur.

Überdies betrifft die Erfindung ein Computerprogrammprodukt mit einem derartigen Computerprogramm.

Im Rahmen der Digitalisierung und der Verwendung von, insbesondere cloudbasierten offenen, IoT(Internet of Things)-Systemen, werden Daten von verschiedenartigen Komponenten aufgenommen und gespeichert. Die Daten zu den jeweiligen Komponenten sind beispielsweise listenartig angeordnet. Eine derartige Anordnung spiegelt nicht den funktionalen Zusammenhang wider.

Insbesondere für ein antriebstechnisches System ist eine funktionale Verknüpfung der Komponentendaten eines Antriebsstrangs sinnvoll, um Messwerte, Fehlerdiagnosen und funktionale Zusammenhänge, beispielsweise von Problemen oder Störfällen, schnell und sicher zu ermitteln. Eine sofortige und umfangreiche Vergleichbarkeit von Messdaten erhöht die Diagnosefähigkeit und das Erkennen von Korrelationen zwischen Fehlern einzelner Komponenten im Gesamtsystem.

Die Offenlegungsschrift EP 3 322 088 A1 beschreibt ein Verfahren zum Überwachen des Betriebes einer elektrischen rotierenden Maschine mit einem Rotor, einem Stator und einem Maschinengehäuse, in dem der Rotor und der Stator aufgenommen sind. Um eine Durchführung des Verfahrens ohne konstruktive Änderungen an der elektrischen rotierenden Maschine zu ermöglichen, wird vorgeschlagen, dass außerhalb des Maschinengehäuses eine erste physikalische Größe des Stators und eine zweite physikalische Größe des Rotors gemessen wird, wobei aus der ersten physikalischen Größe und der zweiten physikalischen Größe mindestens eine Zustandsgröße der elektrischen rotierenden Maschine ermittelt wird.

Die Offenlegungsschrift EP 3 118 605 A1 beschreibt ein Verfahren zur Überwachung eines Lagersystems, insbesondere einer elektrischen Maschine, das einen Wellenabschnitt aufweist. Ein auf den Wellenabschnitt aufgebrachtes erstes Drehmoment und ein von dem Wellenabschnitt aufgebrachtes zweites Drehmoment werden erfasst. Eine Differenz aus dem ersten Drehmoment und dem zweiten Drehmoment wird gebildet, und ein Fehler wird identifiziert, falls die Differenz größer als ein erster Grenzwert ist.

Die Offenlegungsschrift US 2018/0106261 A1 beschreibt ein Verfahren, welches folgende Schritte beinhaltet: Das Erfassen, ob der Verdichter einen Fehler aufweist unter Verwendung performancebasierter Modellierung und strukturbasierter Modellierung physikalischer Aspekte, welche mit dem Betrieb des Verdichters zusammenhängen; das Diagnostizieren jedes erkannten Fehlers, um die Ursache oder die Ursachen des Fehlers zu bestimmen; und das Auswerten jedes diagnostizierten Fehlers, um die Signifikanz des Fehlers zu beurteilen.

Die Offenlegungsschrift US 2012/0239348 A1 beschreibt ein Verfahren zum Überwachen der Funktionsfähigkeit eines mechanischen Antriebsstrangs. Das Verfahren beinhaltet das Erhalten von Spannungs- und Stromsignalen von mindestens einer Phase einer elektrischen Maschine, die mit dem mechanischen Antriebsstrang gekoppelt ist. Das Verfahren beinhaltet außerdem das Darstellen der elektrischen Maschine, die eine nichtsinusförmige Flussverteilung aufweist, als eine Kombination von mehreren einer harmonischen Ordnung entsprechenden sinusverteilten virtuellen elektrischen Maschinen auf Basis der erhaltenen Spannungs- und Stromsignale. Das Verfahren beinhaltet ferner das Bestimmen eines Drehmomentprofils, das einer oder mehreren Kombinationen der sinusverteilten virtuellen elektrischen Maschinen zugeordnet ist. Schließlich beinhaltet das Verfahren das Erfassen des Vorhandenseins einer Anomalie in dem mechanischen Antriebsstrang auf der Basis des Drehmomentprofils oder -spektrums.

Der Erfindung liegt die Aufgabe zugrunde, ein Verfahren zur Überwachung des Betriebes mindestens einer Antriebskomponente anzugeben, welches eine verbesserte Schnelligkeit und Sicherheit bietet.

Die Aufgabe wird durch ein Verfahren zur Überwachung des Betriebes mindestens einer Antriebskomponente gelöst, wobei Daten, welche die mindestens eine Antriebskomponente und/oder einen Betrieb der mindestens einen Antriebskomponente betreffen, an eine zentrale IT-Infrastruktur übertragen werden, wobei die übertragenen Daten innerhalb der zentralen IT-Infrastruktur einem Modell der mindestens einen Antriebskomponente zugeordnet werden, wobei dem Modell der mindestens einen Antriebskomponente ein Modell mindestens einer virtuellen Komponente zugeordnet wird, wobei das Modell der virtuellen Komponente ein technisches Verhalten einer Komponente nachbildet, welche mit der Antriebskomponente elektrisch oder mechanisch verbunden ist, wobei mit Hilfe einer Korrelation der Modelle ein Betriebszustand der Antriebskomponente ermittelt wird, wobei zumindest ein Teil der Daten, welche den Betrieb der mindestens einen Antriebskomponente betreffen, von zumindest einem Sensor ermittelt werden, wobei anhand der Daten des zumindest einen Sensors ein Istwert für zumindest einen Betriebsparameter ermittelt wird, wobei anhand einer Korrelation der Modelle ein Sollwert für den zumindest einen Betriebsparameter ermittelt wird, wobei aus dem Sollwert und dem Istwert des zumindest einen Betriebsparameters ein Betriebszustand der Antriebskomponente ermittelt wird, wobei die Antriebskomponente als Motor ausgeführt ist, der mit einer Lastvorrichtung, welche als Pumpe ausgeführt ist, verbunden ist und zum Antreiben der Lastvorrichtung verwendet wird, wobei die virtuelle Komponente technische Eigenschaften der Lastvorrichtung abbildet.

Die Aufgabe wird darüber hinaus durch ein System gemäß Anspruch 11 gelöst.

Die Aufgabe wird des Weiteren durch ein Computerprogramm zur Durchführung eines derartigen Verfahrens bei Ablauf in einer zentralen IT-Infrastruktur gelöst.

Die Aufgabe wird überdies durch ein Computerprogrammprodukt mit einem derartigen Computerprogramm gelöst.

Die in Bezug auf das Verfahren nachstehend angeführten Vorteile und bevorzugten Ausgestaltungen lassen sich sinngemäß auf das System, das Computerprogramm und das Computerprogrammprodukt übertragen.

Der Erfindung liegt die Überlegung zugrunde, Daten, welche mindestens eine Antriebskomponente in einem Antriebssystem und/oder einen Betrieb der mindestens einen Antriebskomponente betreffen, möglichst schnell und sicher zu interpretieren, indem die Daten an eine zentrale IT-Infrastruktur übertragen und dort einem korrespondierenden Modell zugeordnet werden. Ein Antriebssystem weist beispielsweise mindestens ein Schutzsystem, eine Sicherung, einen Transformator, einen Filter, einen Umrichter, einen Motor, ein Getriebe und/oder eine Last auf. Eine zentrale IT-Infrastruktur ist beispielsweise mindestens ein lokales Computersystem und/oder mindestens ein, insbesondere cloudbasiertes offenes, IoT-System. Die zentrale IT-Infrastruktur stellt Speicherplatz, Rechenleistung und/oder Anwendungssoftware bereit. In einem IoT-System werden Speicherplatz, Rechenleistung und/oder Anwendungssoftware als Dienstleistung über das Internet zur Verfügung gestellt. Das korrespondierende Modell bildet insbesondere ein technisches Verhalten der Antriebskomponente ab. Ferner wird dem Modell der mindestens einen Antriebskomponente ein Modell mindestens einer virtuellen Komponente zugeordnet. Durch die Zuordnung wird eine funktionale Verknüpfung zwischen den Modellen hergestellt. Insbesondere bildet das Modell der virtuellen Komponente das technische Verhalten einer Komponente nach, welche mit der Antriebskomponente elektrisch oder mechanisch verbunden ist. Das Modell der virtuellen Komponente wird beispielsweise von einem Benutzer oder automatisch zugeordnet. Beispielsweise ist nicht anspruchsgemäß die Antriebskomponente ein Generator und das Modell der virtuellen Komponente bildet das Verhalten einer Turbine ab. Mit Hilfe einer Korrelation der Modelle wird ein Betriebszustand der Antriebskomponente ermittelt. Durch die funktionale Verknüpfung der Modelle und die Korrelation wird die Zuverlässigkeit bei einer Fehlerdiagnose verbessert und eine Reaktionszeit bei auftretenden Fehlern wird verkürzt. Ferner wird eine Wartung der mindestens einen Antriebskomponente vereinfacht.

In einer bevorzugten Ausführungsform umfassen die Daten, welche die mindestens eine Antriebskomponente betreffen, eine individuelle Produktkennzeichnung. Eine individuelle Produktkennzeichnung ist beispielsweise eine Seriennummer, welche nicht nur den Produkttyp, sondern eine möglicherweise individualisierte Ausgestaltung eines Produkttyps kennzeichnet. Durch eine individuelle Produktkennzeichnung ist in der zentralen IT-Infrastruktur ein Modell der jeweiligen Antriebskomponente mit zumindest einem individualisierten technischen Parameter hinterlegbar, sodass die Antriebskomponente durch das Modell sehr präzise abbildbar ist.

Besonders vorteilhaft wird das Modell der mindestens einen Antriebskomponente anhand der individuellen Produktkennzeichnung automatisch zugeordnet. Beispielsweise ist das Modell einer Seriennummer in einer Datenbank eindeutig zugeordnet. Durch die automatische Zuordnung wird die Datenverarbeitung beschleunigt und die Bedienfreundlichkeit erhöht.

Bei einer weiteren vorteilhaften Ausgestaltung wird bei der Ermittlung des Betriebszustandes der Antriebskomponente zumindest eine Kennlinie verwendet. Eine Kennlinie ist dem Modell einer Antriebskomponente und/oder dem Modell zumindest einer weiteren, insbesondere virtuellen, Komponente zugeordnet. Insbesondere bildet eine Kennlinie technische Eigenschaften der Antriebskomponente in Abhängigkeit von zumindest einem Parameter ab. Beispielsweise wird für eine Asynchronmaschine eine Drehzahl-Drehmomentkennlinie eingesetzt. Optional wird eine Kennlinienschar verwendet, welche eine mehrdimensionale Parameterabhängigkeit abbildet. Durch die Verwendung von Kennlinien ist ein komplexes technisches Verhalten einer Komponente schnell und zuverlässig ermittelbar.

Erfindungsgemäss wird zumindest ein Teil der Daten, welche den Betrieb der mindestens einen Antriebskomponente betreffen, von zumindest einem Sensor ermittelt. Durch die Verwendung von Sensoren wird die Zuverlässigkeit der Überwachung der mindestens einen Antriebskomponente im Antriebssystem verbessert. Insbesondere eine Fehlerdiagnose wird erleichtert.

Besonders vorteilhaft werden vom zumindest einen Sensor eine Temperatur, eine Schwingung und/oder ein Magnetfeld gemessen. Derartige Sensorik ist ohne konstruktive Änderungen der Antriebskomponente verwendbar und ermöglicht eine zuverlässige und genaue Messung.

Anspruchsgemäß wird anhand der Daten des zumindest einen Sensors ein Istwert für zumindest einen Betriebsparameter ermittelt, wobei anhand einer Korrelation der Modelle ein Sollwert für den zumindest einen Betriebsparameter ermittelt wird, wobei aus dem Sollwert und dem Istwert des zumindest einen Betriebsparameters ein Betriebszustand der Antriebskomponente ermittelt wird. Durch Korrelation der funktional verknüpften Modelle unter Einbezug von gemessenen Sensordaten wird die Zuverlässigkeit der Überwachung des Betriebes der Antriebskomponente verbessert.

Besonders vorteilhaft wird der Betriebszustand der Antriebskomponente mit Hilfe zumindest einer Vergleichsoperation ermittelt. Beispielsweise werden mindestens ein Sollwert und ein Istwert zur Ermittlung eines Betriebszustandes miteinander verglichen. Eine derartige Vergleichsoperation ist einfach zu implementieren, wobei ein fehlerhafter Betriebszustand schnell und zuverlässig feststellbar ist.

In einer weiteren vorteilhaften Ausgestaltung ist mindestens eine Antriebskomponente als elektrische rotierende Maschine ausgeführt, wobei die Daten, welche den Betrieb der mindestens einen elektrischen rotierenden Maschine betreffen, zumindest eine Drehzahl und/oder ein Drehmoment umfassen. Eine Drehzahl und/oder ein Drehmoment haben sich als einfach und zuverlässig erwiesen, um den Betrieb einer elektrischen rotierenden Maschine zu charakterisieren.

In einer nicht beanspruchten Ausführungsform ist mindestens eine Antriebskomponente als Umrichter ausgeführt, wobei die Daten, welche den Betrieb des mindestens einen Umrichters betreffen, zumindest eine Zwischenkreisspannung und/oder einen Eingangsstrom des Umrichters umfassen. Eine Zwischenkreisspannung und/oder einen Eingangsstrom haben sich als einfach und zuverlässig erwiesen, um den Betrieb eines Umrichters zu charakterisieren.

Besonders vorteilhaft werden die Daten zumindest teilweise von einem optisch lesbaren Code eingelesen. Ein optisch lesbarer Code ist beispielsweise ein Barcode, ein QR-Code oder ein Data-Matrix-Code. Derartige optisch lesbare Codes sind einfach und schnell einlesbar.

In einer bevorzugten Ausführungsform werden die Daten zumindest teilweise über eine Netzwerkschnittstelle an die zentrale IT-Infrastruktur übertragen. Beispielsweise erfolgt die Datenübertragung mittels einer Ethernet-Schnittstelle oder drahtlos über WiFi. Eine Datenübertragung über eine Netzwerkschnittstelle ist einfach und sicher.

In einer weiteren vorteilhaften Ausgestaltung wird zumindest eine den Betriebszustand der Antriebskomponente kennzeichnende Größe grafisch dargestellt. Durch die grafische Darstellung wird die Übersichtlichkeit verbessert, sodass die Reaktionszeit bei auftretenden Fehlern verkürzt wird.

Im Folgenden wird die Erfindung anhand der in den Figuren dargestellten Ausführungsbeispiele näher beschrieben und erläutert.

Es zeigen:
FIG 1 ein Blockschaltbild einer ersten Ausführungsform eines Systems zur Überwachung des Betriebes einer Antriebskomponente und
FIG 2 ein Blockschaltbild eines Systems zur Überwachung des Betriebes einer Antriebskomponente, welches nicht von den Ansprüchen abgedeckt ist.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

Gleiche Bezugszeichen haben in den verschiedenen Figuren die gleiche Bedeutung.

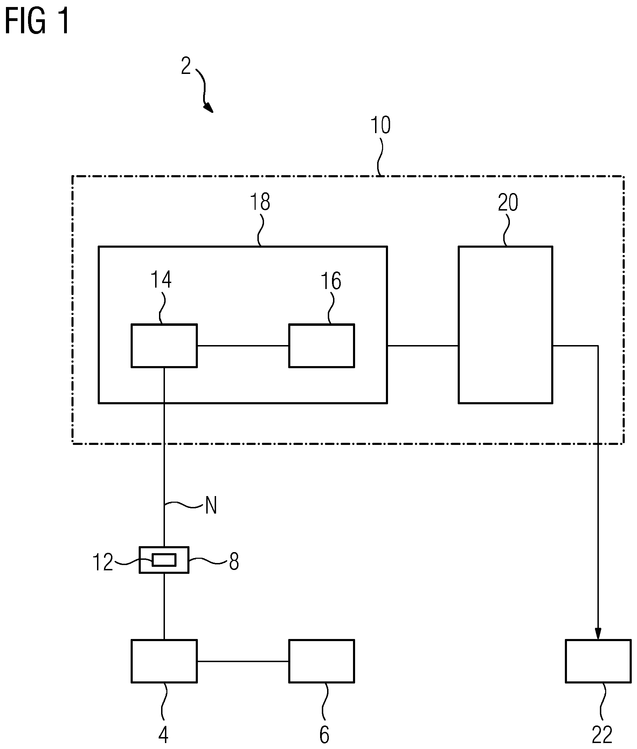

FIG 1 zeigt ein Blockschaltbild eines Systems 2 zur Überwachung des Betriebes einer Antriebskomponente 4. Die Antriebskomponente 4 ist als Motor ausgeführt, der mit einer Lastvorrichtung 6, welche als Pumpe ausgeführt ist, verbunden ist und zum Antreiben der Lastvorrichtung 6 verwendet wird.

Die Antriebskomponente 4 weist eine Vorrichtung 8 auf, welche Daten, die die Antriebskomponente 4 und/oder einen Betrieb der Antriebskomponente 4 betreffen, an eine zentrale IT-Infrastruktur 10 überträgt. Eine derartige Vorrichtung 8 ist beispielsweise eine Sensorbox, welche von der Sensorbox erfasste Daten, insbesondere der zentralen IT-Infrastruktur 10, über eine Kommunikationsschnittstelle zur Verfügung stellt. Die zentrale IT-Infrastruktur 10 ist beispielsweise mindestens ein lokales Computersystem und/oder mindestens ein, insbesondere cloudbasiertes offenes, IoT-System. Die zentrale IT-Infrastruktur 10 stellt Speicherplatz, Rechenleistung und/oder Anwendungssoftware bereit. In einem IoT-System werden Speicherplatz, Rechenleistung und/oder Anwendungssoftware als Dienstleistung über das Internet zur Verfügung gestellt. Daten, welche die Antriebskomponente 4 betreffen, umfassen eine individuelle Produktkennzeichnung, beispielsweise eine Seriennummer. Zusätzlich umfassen Daten, welche einen Betrieb der Antriebskomponente 4 betreffen, Sensordaten, welche von zumindest einem Sensor 12 ermittelt werden. Der Sensor 12 ist als ein Temperatursensor, ein Schwingungssensor und/oder als ein Magnetfeldsensor ausgeführt. Insbesondere wird mit einem Schwingungssensor eine Vibration erfasst, welche von einer Rotordrehzahl abhängige Frequenzanteile enthält, sodass mit Hilfe der Vibrationsdaten beispielsweise eine Rotordrehzahl ermittelbar ist. Ein Magnetfeldsensor erfasst beispielsweise eine Statorfrequenz und/oder eine Schlupffrequenz.

Die Daten werden zumindest teilweise über eine Netzwerkschnittstelle N an die zentrale IT-Infrastruktur 10 übertragen. Beispielsweise erfolgt die Datenübertragung mittels einer Ethernet-Schnittstelle oder drahtlos über WiFi. Optional wird zumindest ein Teil der Daten, beispielsweise die Seriennummer der Antriebskomponente 4, über ein Lesegerät von einem optisch lesbaren Code eingelesen. Ein optisch lesbarer Code ist beispielsweise ein Barcode, ein QR-Code oder ein Data-Matrix-Code, wobei ein Lesegerät beispielsweise ein Smartphone oder ein Tablet mit einer Kamera ist. Optional umfasst der optisch lesbare Code zumindest einen Teil der Sensordaten und ändert sich dynamisch, sodass der Teil der Sensordaten des optisch lesbaren Codes über das Lesegerät an die zentrale IT-Infrastruktur 10 übertragen wird. Ein dynamisch änderbarer Code ist auf einem Display oder einem ePaper darstellbar.

In der zentralen IT-Infrastruktur 10 wird anhand der übermittelten Seriennummer ein Modell 14 der Antriebskomponente 4, insbesondere automatisch, zugeordnet, wobei die Seriennummer ein individuelles Modell 14 definiert. Ein individuelles Modell 14 der Antriebskomponente 4 ist ein Modell 14, welches dieser speziellen Seriennummer zugeordnet ist und zumindest einen individualisierten technischen Parameter, wie beispielsweise einen Bereich einer Betriebsleistung aufweist.

Dem Modell 14 der Antriebskomponente 4 wird ein Modell 16 einer virtuellen Komponente zugeordnet, wobei die virtuelle Komponente technische Eigenschaften der Lastvorrichtung 6 abbildet. Die Modelle 14, 16 sind in einer Modelldatenbank 18 in der zentralen IT-Infrastruktur 10 hinterlegt und von dort abrufbar. Beispielsweise umfasst das Modell 16 der virtuellen Komponente mindestens eine Pumpenkennlinie der als Pumpe ausgeführten Lastvorrichtung 6. Das Modell 16 der virtuellen Komponente umfasst optional ein der mindestens einen Pumpenkennlinie zugeordnetes Toleranzband. Die Zuordnung der virtuellen Komponente erfolgt beispielsweise manuell durch einen Benutzer oder erfolgt automatisch, beispielsweise anhand in der zentralen IT-Infrastruktur 10 hinterlegter Daten zur Seriennummer.

Mit Hilfe der Sensordaten wird ein Istwert für zumindest einen Betriebsparameter der Antriebskomponente 4 ermittelt. Beispielsweise werden aus von einem Schwingungssensor ermittelten Vibrationsdaten und aus von einem Magnetfeldsensor ermittelten Felddaten eine Drehzahl der als Motor ausgeführten Antriebskomponente 4 sowie ein Drehmoment ermittelt.

Ferner wird für den zumindest einen Betriebsparameter der Antriebskomponente 4 ein Sollwert aus einer Korrelation des Modells 14 der Antriebskomponente 4 und des Modells 16 der virtuellen Komponente ermittelt. Beispielsweise erfolgt eine Korrelation des erforderlichen Drehmoments einer Pumpe in Abhängigkeit einer Drehzahl mit der Drehzahl-Drehmoment-Kennlinie eines Motors, um einen Sollwert für einen Betriebspunkt zu erhalten.

In einer Auswerteeinheit 20 werden aus dem Istwert und Sollwert des zumindest einen Betriebsparameters der Antriebskomponente 4 ein Betriebszustand ermittelt. Die Ermittlung des Betriebszustands erfolgt beispielsweise mit Hilfe zumindest einer Vergleichsoperation. Der Betriebszustand wird an einer Ausgabeeinheit 22 ausgegeben. Eine Ausgabeeinheit 22 ist beispielsweiseeine ein Display. Beispielsweise wird ausgegeben, ob der Motor in einem für die Pumpe zulässigen Betriebszustand arbeitet. Falls nicht, wird eine Fehlermeldung ausgegeben. Optional wird zumindest eine den Betriebszustand der Antriebskomponente 4 kennzeichnende Größe grafisch dargestellt. Beispielsweise wird ein Verlauf eines Drehmoments und/oder einer Drehzahl grafisch auf einem Display dargestellt. Zusätzlich oder alternativ wird der Betriebszustand akustisch oder über mindestens eine LED farblich codiert dargestellt.

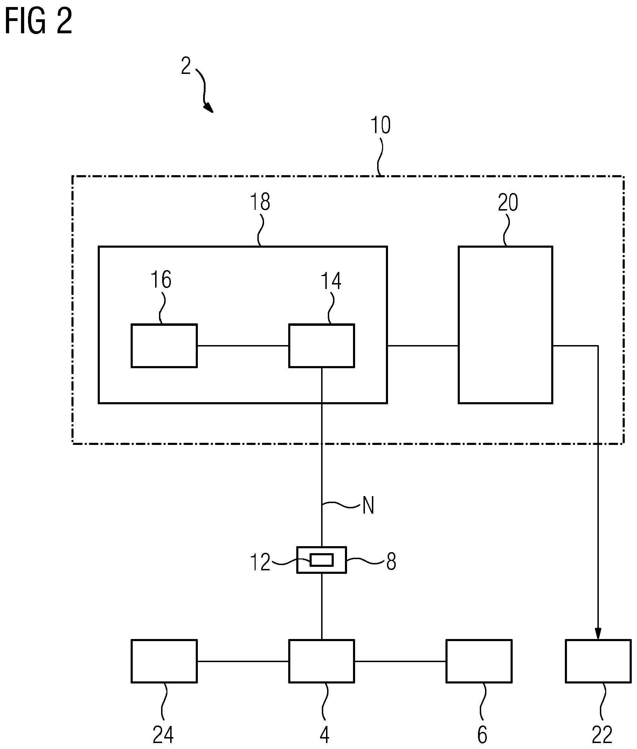

FIG 2 zeigt ein Blockschaltbild eines Systems 2 zur Überwachung des Betriebes einer Antriebskomponente 4, welches nicht von den Ansprüchen abgedeckt ist, wobei die Antriebskomponente 4 als Umrichter ausgeführt ist, der über einen Netztransformator 24 gespeist und zur Versorgung der Lastvorrichtung 6 verwendet wird. Die Lastvorrichtung ist beispielsweise ein Motor. Die als Umrichter ausgeführte Antriebskomponente 4 weist, wie in FIG 1, eine Vorrichtung 8 auf, welche Daten, die die Antriebskomponente 4 und/oder einen Betrieb der Antriebskomponente 4 betreffen, an eine zentrale IT-Infrastruktur 10 überträgt. Daten, welche die Antriebskomponente 4 betreffen, umfassen eine individuelle Produktkennzeichnung, beispielsweise eine Seriennummer. Zusätzlich umfassen Daten, welche einen Betrieb der Antriebskomponente 4 betreffen, Sensordaten, welche von zumindest einem Sensor 12 ermittelt werden. Der Sensor 12 ist als Spannungsmessvorrichtung und/oder als Frequenzmessvorrichtung ausgeführt. Wie in FIG 1 werden die Daten zumindest teilweise über eine Netzwerkschnittstelle N an die zentrale IT-Infrastruktur 10 übertragen.

In der zentralen IT-Infrastruktur 10 wird anhand der übermittelten Seriennummer ein Modell 14 des Umrichters, insbesondere automatisch, zugeordnet, wobei durch die Seriennummer ein individuelles Modell 14 definiert wird.

Dem Modell 14 des Umrichters wird ein Modell 16 einer virtuellen Komponente zugeordnet, wobei die virtuelle Komponente technische Parameter des Netztransformators 24, wie beispielsweise ein, insbesondere komplexes, Übersetzungsverhältnis und/oder einen, insbesondere vom Ausgangsstrom abhängigen, Wirkungsgrad abbildet. Die Zuordnung der virtuellen Komponente erfolgt beispielsweise manuell durch einen Benutzer oder erfolgt automatisch, beispielsweise anhand in der zentralen IT-Infrastruktur 10 hinterlegter Daten zur Seriennummer.

Mit Hilfe der Sensordaten wird ein Istwert für zumindest einen Betriebsparameter der als Umrichter ausgeführten Antriebskomponente 4 ermittelt. Beispielsweise wird ein Istwert für mindestens einen Lastpunkt aus einer Zwischenkreisspannung und einem Eingangsstrom des Umrichters ermittelt.

Darüber hinaus wird für den zumindest einen Betriebsparameter der als Umrichter ausgeführten Antriebskomponente 4 ein Sollwert aus einer Korrelation des Modells 14 der Antriebskomponente 4 und des Modells 16 der virtuellen Komponente ermittelt. Beispielsweise wird ein Sollwert für den mindestens einen Lastpunkt anhand von Modellparametern des Modells 14 des Umrichters und des Modells 16 des Netztransformators 24 ermittelt.

In einer Auswerteeinheit 20 werden aus dem Istwert und dem Sollwert ein Betriebszustand ermittelt. Der Betriebszustand wird an einer Ausgabeeinheit 22 ausgegeben. Beispielsweise wird ausgegeben, ob der Umrichter fehlerhaft arbeitet und/oder eine Anomalie des Netztransformators 24 vorliegt. Falls dies der Fall ist, wird beispielsweise eine Fehlermeldung ausgegeben. Die weitere Ausgestaltung des Systems 2 in FIG 2 entspricht der in FIG 1.

Zusammenfassend betrifft die Erfindung ein Verfahren zur Überwachung des Betriebes mindestens einer Antriebskomponente 4, gemäß den Merkmalen des Anspruchs 1. Um die Schnelligkeit und Sicherheit der Überwachung zu verbessern wird vorgeschlagen, dass Daten, welche die mindestens eine Antriebskomponente 4 und/oder einen Betrieb der mindestens einen Antriebskomponente 4 betreffen, an eine zentrale IT-Infrastruktur 10 übertragen werden, wobei die übertragenen Daten innerhalb der zentralen IT-Infrastruktur 10 einem Modell 14 der mindestens einen Antriebskomponente 4 zugeordnet werden, wobei dem Modell 14 der mindestens einen Antriebskomponente 14 ein Modell 16 mindestens einer virtuellen Komponente zugeordnet wird, wobei mit Hilfe einer Korrelation der Modelle 14, 16 ein Betriebszustand der Antriebskomponente 4 ermittelt wird.

## Patentansprüche

1. Verfahren zur Überwachung des Betriebes mindestens einer Antriebskomponente (4),
wobei Daten, welche die mindestens eine Antriebskomponente (4) und einen Betrieb der mindestens einen Antriebskomponente (4) betreffen, an eine zentrale IT-Infrastruktur (10) übertragen werden,
wobei die übertragenen Daten innerhalb der zentralen IT-Infrastruktur (10) einem Modell (14) der mindestens einen Antriebskomponente (4) zugeordnet werden,
wobei dem Modell (14) der mindestens einen Antriebskomponente (14) ein Modell (16) mindestens einer virtuellen Komponente zugeordnet wird,
wobei das Modell (16) der virtuellen Komponente ein technisches Verhalten einer Komponente nachbildet, welche mit der Antriebskomponente (4) elektrisch oder mechanisch verbunden ist,
wobei mit Hilfe einer Korrelation der Modelle (14, 16) ein Betriebszustand der Antriebskomponente (4) ermittelt wird, wobei zumindest ein Teil der Daten, welche den Betrieb der mindestens einen Antriebskomponente (4) betreffen, von zumindest einem Sensor (12) ermittelt werden, wobei anhand der Daten des zumindest einen Sensors (12) ein Istwert für zumindest einen Betriebsparameter ermittelt wird,
wobei anhand einer Korrelation der Modelle (14, 16) ein Sollwert für den zumindest einen Betriebsparameter ermittelt wird,
wobei aus dem Sollwert und dem Istwert des zumindest einen Betriebsparameters ein Betriebszustand der Antriebskomponente (4) ermittelt wird,
wobei die Antriebskomponente (4) als Motor ausgeführt ist, der mit einer Lastvorrichtung (6), welche als Pumpe ausgeführt ist, verbunden ist und zum Antreiben der Lastvorrichtung (6) verwendet wird,
wobei die virtuelle Komponente technische Eigenschaften der Lastvorrichtung (6) abbildet.

2. Verfahren nach Anspruch 1,
wobei die Daten, welche die mindestens eine Antriebskomponente (4) betreffen, eine individuelle Produktkennzeichnung umfassen.

3. Verfahren nach Anspruch 2,
wobei das Modell (14) der mindestens einen Antriebskomponente (4) anhand der individuelle Produktkennzeichnung automatisch zugeordnet wird.

4. Verfahren nach einem der vorherigen Ansprüche,
wobei bei der Ermittlung des Betriebszustandes der Antriebskomponente (4) zumindest eine Kennlinie verwendet wird.

5. Verfahren nacheinem der vorherigen Ansprüche,
wobei vom zumindest einen Sensor (12) eine Temperatur, eine Schwingung und/oder ein Magnetfeld gemessen werden.

6. Verfahren nach einem der vorherigen Ansprüche,
wobei der Betriebszustand der Antriebskomponente (4) mit Hilfe zumindest einer Vergleichsoperation ermittelt wird.

7. Verfahren nach einem der vorherigen Ansprüche,
wobei mindestens eine Antriebskomponente (4) als elektrische rotierende Maschine ausgeführt ist,
wobei die Daten, welche den Betrieb der mindestens einen elektrischen rotierenden Maschine betreffen, zumindest eine Drehzahl und/oder ein Drehmoment umfassen.

8. Verfahren nach einem der vorherigen Ansprüche, wobei die Daten zumindest teilweise von einem optisch lesbaren Code eingelesen werden.

9. Verfahren nach einem der vorherigen Ansprüche,
wobei die Daten zumindest teilweise über eine Netzwerkschnittstelle (N) an die zentrale IT-Infrastruktur (10) übertragen werden.

10. Verfahren nach einem der vorherigen Ansprüche,
wobei zumindest eine den Betriebszustand der Antriebskomponente (4) kennzeichnende Größe grafisch dargestellt wird.

11. System (2) zur Überwachung des Betriebes mindestens einer Antriebskomponente (4) aufweisend
- eine Vorrichtung (8) zur Übertragung von Daten, welche die mindestens eine Antriebskomponente (4) und einen Betrieb der mindestens einen Antriebskomponente (4) betreffen, an eine zentrale IT-Infrastruktur (10),
- ein Modell (14) der mindestens einen Antriebskomponente (4) innerhalb der zentralen IT-Infrastruktur (10), welchem die übertragenen Daten der mindestens einen Antriebskomponente (4) zugeordnet sind,
- ein Modell (16) mindestens einer virtuellen Komponente, welches dem Modell (14) der mindestens einen Antriebskomponente (4) zugeordnet ist,
wobei das Modell (16) der virtuellen Komponente ein technisches Verhalten einer Komponente nachbildet, welche mit der Antriebskomponente (4) elektrisch oder mechanisch verbunden ist,
- eine Auswerteeinheit (20), die dafür vorgesehen ist mit Hilfe einer Korrelation der Modelle (14, 16) einen Betriebszustand der Antriebskomponente (4) zu ermitteln, und
zumindest einen Sensor (12) zur Ermittlung zumindest eines Teils der Daten, welche den Betrieb der mindestens einen Antriebskomponente (4) betreffen, wobei anhand der Daten des zumindest einen Sensors (12) ein Istwert für zumindest einen Betriebsparameter ermittelbar ist,
wobei anhand einer Korrelation der Modelle (14, 16) ein Sollwert für den zumindest einen Betriebsparameter ermittelbar ist,
wobei aus dem Sollwert und dem Istwert des zumindest einen Betriebsparameters ein Betriebszustand der Antriebskomponente (4) ermittelbar ist,
wobei die Antriebskomponente (4) als Motor ausgeführt ist, der mit einer Lastvorrichtung (6), welche als Pumpe ausgeführt ist, verbunden ist und zum Antreiben der Lastvorrichtung (6) verwendbar ist,
wobei die virtuelle Komponente technische Eigenschaften der Lastvorrichtung (6) abbildet.

12. System (2) nach Anspruch 11,
wobei die Daten, welche die mindestens eine Antriebskomponente (4) betreffen, eine individuelle Produktkennzeichnung umfassen.

13. System (2) nach einem der Ansprüche 11 oder 12, wobei zumindest eines der Modelle (14, 16) eine Kennlinie umfasst.

14. System (2) nach einem der Ansprüche 11 bis 13, wobei der zumindest eine Sensor (12) als ein Temperatursensor, ein Schwingungssensor und/oder als ein Magnetfeldsensor ausgeführt ist.

15. System (2) nach einem der Ansprüche 11 bis 14,
wobei mindestens eine Antriebskomponente (4) als elektrische rotierende Maschine ausgeführt ist,
wobei die Daten, welche den Betrieb der mindestens einen elektrischen rotierenden Maschine betreffen, zumindest eine Drehzahl und/oder ein Drehmoment umfassen.

16. System (2) nach einem der Ansprüche 11 bis 15, wobei mindestens eine Antriebskomponente (4) einen optisch lesbaren Code aufweist, welcher zumindest ein Teil der übertragbaren Daten enthält.

17. System (2) nach einem der Ansprüche 11 bis 16, aufweisend eine Netzwerkschnittstelle (N), über welche zumindest ein Teil der Daten an die zentrale IT-Infrastruktur (10) übertragbar sind.

18. Computerprogramm zur Durchführung eines Verfahrens nach einem der Ansprüche 1 bis 10 bei Ablauf in einer zentralen IT-Infrastruktur (10).

19. Computerprogrammprodukt mit einem Computerprogramm nach Anspruch 1.

## Claims

1. Method for monitoring the operation of at least one drive component (4),
wherein data relating to the at least one drive component (4) and an operation of the at least one drive component (4) is transferred to a central IT infrastructure (10),
wherein the transferred data within the central IT infrastructure (10) is assigned to a model (14) of the at least one drive component (4),
wherein a model (16) of at least one virtual component is assigned to the model (14) of the at least one drive component (14),
wherein the model (16) of the virtual component simulates a technical behaviour of a component which is electrically or mechanically connected to the drive component (4),
wherein an operating state of the drive component (4) is determined with the aid of a correlation of the models (14, 16),
wherein at least some of the data relating to the operation of the at least one drive component (4) is determined by at least one sensor (12), wherein an actual value for at least one operating parameter is determined on the basis of the data of the at least one sensor (12),
wherein a target value for the at least one operating parameter is determined on the basis of a correlation of the models (14, 16),
wherein an operating state of the drive component (4) is determined from the target value and the actual value of the at least one operating parameter, wherein the drive component (4) is designed as a motor, which is connected to a load device (6) designed as a pump, and is used to drive the load device (6),
wherein the virtual component maps technical properties of the load device (6).

2. Method according to claim 1,
wherein the data relating to the at least one drive component (4) comprises an individual product identification.

3. Method according to claim 2,
wherein the model (14) of the at least one drive component (4) is automatically assigned on the basis of the individual product identification.

4. Method according to one of the preceding claims,
wherein at least one characteristic curve is used when determining the operating state of the drive component (4).

5. Method according to one of the preceding claims,
wherein a temperature, a vibration and/or a magnetic field are measured by the at least one sensor (12).

6. Method according to one of the preceding claims,
wherein the operating state of the drive component (4) is determined with the aid of at least one comparison operation.

7. Method according to one of the preceding claims,
wherein at least one drive component (4) is designed as an electrical rotating machine,
wherein the data relating to the operation of the at least one electrical rotating machine comprises at least one rotation speed and/or a torque.

8. Method according to one of the preceding claims,
wherein the data is read at least partially from an optically readable code.

9. Method according to one of the preceding claims,
wherein the data is transferred at least partially via a network interface (N) to the central IT infrastructure (10).

10. Method according to one of the preceding claims,
wherein at least one variable characterising the operating state of the drive component (4) is graphically represented.

11. System (2) for monitoring the operation of at least one drive component (4), having
- a device (8) for transferring data relating to the at least one drive component (4) and an operation of the at least one drive component (4) to a central IT infrastructure (10),
- a model (14) of the at least one drive component (4) within the central IT infrastructure (10) to which the transferred data of the at least one drive component (4) is assigned,
- a model (16) of at least one virtual component, which is assigned to the model (14) of the at least one drive component (4),
wherein the model (16) of the virtual component simulates a technical behaviour of a component which is electrically or mechanically connected to the drive component (4),
- an evaluation unit (20) which is provided to determine an operating state of the drive component (4) with the aid of a correlation of the models (14, 16), and
at least one sensor (12) for determination of at least some of the data relating to the operation of the at least one drive component (4), wherein an actual value for at least one operating parameter can be determined on the basis of the data of the at least one sensor (12),
wherein a target value for the at least one operating parameter can be determined on the basis of a correlation of the models (14, 16),
wherein an operating state of the drive component (4) can be determined from the target value and the actual value of the at least one operating parameter,
wherein the drive component (4) is designed as a motor, which is connected to a load device (6) designed as a pump, and is used to drive the load device (6),
wherein the virtual component maps technical properties of the load device (6).

12. System (2) according to claim 11,
wherein the data relating to the at least one drive component (4) comprises an individual product identification.

13. System (2) according to one of claims 11 or 12,
wherein at least one of the models (14, 16) comprises a characteristic curve.

14. System (2) according to one of claims 11 to 13,
wherein the at least one sensor (12) is designed as a temperature sensor, a vibration sensor and/or as a magnetic field sensor.

15. System (2) according to one of claims 11 to 14,
wherein at least one drive component (4) is designed as an electrical rotating machine,
wherein the data relating to the operation of the at least one electrical rotating machine comprises at least one rotation speed and/or a torque.

16. System (2) according to one of claims 11 to 15,
wherein at least one drive component (4) has an optically readable code which contains at least some of the transferable data.

17. System (2) according to one of claims 11 to 16,
having a network interface (N) via which at least some of the data can be transferred to the central IT infrastructure (10).

18. Computer program for carrying out a method according to one of claims 1 to 10 when run in a central IT infrastructure (10).

19. Computer program product with a computer program according to claim 18.

## Revendications

1. Procédé de contrôle du fonctionnement d'au moins un composant (4) d'entraînement,
dans lequel on transmet à une infrastructure (10) IT centralisée des données, qui concernent du au moins un composant (4) d'entraînement et un fonctionnement du au moins un composant (4) d'entraînement,
dans lequel on associe les données transmises au sein de l'infrastructure IT (10) centralisée à un modèle (14) du au moins un composant (4) d'entraînement,
dans lequel on associe un modèle (16) du au moins un composant virtuel au modèle (14) du au moins un composant (14) d'entraînement,
dans lequel le modèle (16) du composant virtuel représente un comportement technique d'un composant, qui est relié électriquement ou mécaniquement au composant (4) d'entraînement,
dans lequel, à l'aide d'une corrélation entre les modèles (14, 16), on détermine un état de fonctionnement du composant (4) d'entraînement, dans lequel on détermine, par au moins un capteur (12), au moins une partie des données, qui concerne le fonctionnement du au moins un composant (4) d'entraînement, dans lequel, à l'aide des données du au moins un capteur (12), on détermine une valeur réelle du au moins un paramètre de fonctionnement,
dans lequel, à l'aide d'une corrélation des modèles (14, 16), on détermine une valeur de consigne du au moins un paramètre de fonctionnement,
dans lequel, à partir de la valeur de consigne et de la valeur réelle du au moins un paramètre de fonctionnement, on détermine un état de fonctionnement du composant (4) d'entraînement,
dans lequel le composant (4) d'entraînement est réalisé en moteur, qui est relié à un dispositif (6) de charge, lequel est réalisé en pompe, et qui est utilisé pour entraîner le dispositif (6) de charge,
dans lequel le composant virtuel représente des propriétés techniques du dispositif (6) de charge.

2. Procédé suivant revendication 1,
dans lequel les données, qui concernent le au moins un composant (4) d'entraînement, comprennent une caractérisation individuelle de produit.

3. Procédé suivant revendication 2,
dans lequel on associe automatiquement, à l'aide de la caractérisation individuelle du produit, le modèle (14) du au moins un composant (4) d'entraînement.

4. Procédé suivant l'une des revendications précédentes, dans lequel on utilise au moins une courbe caractéristique lors de la détermination de l'état de fonctionnement du composant (4) d'entraînement.

5. Procédé suivant l'une des revendications précédentes, dans lequel on mesure par au moins un capteur (12) une température, une vibration et/ou un champ magnétique.

6. Procédé suivant l'une des revendications précédentes, dans lequel on détermine l'état de fonctionnement du composant (4) d'entraînement à l'aide d'au moins une opération de comparaison.

7. Procédé suivant l'une des revendications précédentes, dans lequel au moins un composant (4) d'entraînement est réalisé sous la forme d'une machine électrique tournante, dans lequel les données, qui concernent le fonctionnement de la au moins une machine électrique tournante, comprennent au moins une vitesse de rotation et/ou un couple.

8. Procédé suivant l'une des revendications précédentes,
dans lequel on lit les données au moins en partie par un code déchiffrable optiquement.

9. Procédé suivant l'une des revendications précédentes,
dans lequel on transmet à l'infrastructure IT (10) centralisée les données au moins en partie par une interface (N) de réseau.

10. Procédé suivant l'une des revendications précédentes,
dans lequel on représente graphiquement au moins une grandeur caractérisant l'état de fonctionnement du composant (4) d'entraînement.

11. Système (2) de contrôle du fonctionnement d'au moins un composant (4) d'entraînement, comportant
- un dispositif (8) de transmission à une infrastructure IT (10) centralisée de données, qui concernent au moins un composant (4) d'entraînement et un fonctionnement du au moins un composant (4) d'entraînement,
- un modèle (14) du au moins un composant (4) d'entraînement au sein de l'infrastructure IT (10) centralisée, auquel les données transmises du au moins un composant (4) d'entraînement sont associées,
- un modèle (16) d'au moins un composant virtuel, qui est associé au modèle (14) du au moins un composant (4) d'entraînement,
dans lequel le modèle (16) du composant virtuel représente un comportement technique d'un composant, qui est relié électriquement ou mécaniquement au composant (4) d'entraînement,
- une unité (20) d'analyse, qui est prévue pour, à l'aide d'une corrélation entre les modèles (14, 16), déterminer un état de fonctionnement du composant (4) d'entraînement, et
au moins un capteur (12) de détermination d'au moins une partie des données, qui concernent le fonctionnement du au moins un composant (4) d'entraînement, dans lequel on détermine, par au moins un capteur (12), au moins une partie des données, qui concerne le fonctionnement du au moins un composant (4) d'entraînement, dans lequel, à l'aide des données du au moins un capteur (12), on détermine une valeur réelle du au moins un paramètre de fonctionnement,
dans lequel, à l'aide d'une corrélation des modèles (14, 16), on détermine une valeur de consigne du au moins un paramètre de fonctionnement,
dans lequel le composant (4) d'entraînement est réalisé en moteur, qui est relié à un dispositif (6) de charge, lequel est réalisé en pompe, et qui est utilisé pour entraîner le dispositif (6) de charge,
dans lequel le composant virtuel représente des propriétés techniques du dispositif (6) de charge.

12. Système (2) suivant la revendication 11,
dans lequel les données, qui concernent au moins un composant (4) d'entraînement, comprennent une caractérisation individuelle de produit.

13. Système (2) suivant l'une des revendications 11 ou 12,
dans lequel au moins l'un des modèles (14, 16) comprend une courbe caractéristique.

14. Système (2) suivant l'une des revendications 11 à 13,
dans lequel le au moins un capteur (12) est réalisé sous la forme d'un capteur de température, d'un capteur de vibration et/ou d'un capteur de champ magnétique.

15. Système (2) suivant l'une des revendications 11 à 14,
dans lequel au moins un composant (4) d'entraînement est réalisé sous la forme d'une machine électrique tournante, dans lequel les données qui concernent le fonctionnement d'au moins une machine électrique tournante, comprennent au moins une vitesse de rotation et/ou un couple.

16. Système (2) suivant l'une des revendications 11 à 15,
dans lequel au moins un composant (4) d'entraînement a un code déchiffrable optiquement, qui contient au moins une partie des données pouvant être transmises.

17. Système (2) suivant l'une des revendications 11 à 16, comportant une interface (N) de réseau, par laquelle au moins une partie des données peuvent, être transmises à l'infrastructure IT (10) centralisée.

18. Programme d'ordinateur pour effectuer un procédé suivant l'une des revendications 1 à 10, lorsque qu'il se déroule dans une infrastructure IT (10) centralisée.

19. Produit de programme d'ordinateur ayant un programme d'ordinateur, suivant la revendication 18.
